# EUROPEAN PATENT SPECIFICATION

(11) **EP 2 894 310 B1**
(45) Date of publication and mention of the grant of the patent: **07.03.2018**
(21) Application number: 12882811.8
(22) Date of filing: 10.08.2012
(51) Int. Cl.: F01N 3/36, F01N 3/08, F01N 3/025, F01N 3/20

(54) **ADDITIVE SUPPLY DEVICE FOR INTERNAL COMBUSTION ENGINES**
ZUSATZSTOFFZUFUHRVORRICHTUNG FÜR VERBRENNUNGSMOTOREN
DISPOSITIF D'ALIMENTATION EN ADDITIF POUR DES MOTEURS À COMBUSTION INTERNE

(43) Date of publication of application: 15.07.2015
(73) Proprietor: Toyota Jidosha Kabushiki Kaisha, Toyota-shi, Aichi 471-8571 (JP)
(72) Inventor: OTA, Hirohiko, Toyota-shi Aichi 471-8571 (JP)
(74) Representative: D Young & Co LLP
(86) International application number: PCT/JP2012/070518
(87) International publication number: WO 2014/024307

(56) References cited:
- WO-A1-2011/029774
- DE-A1-102010 024 021
- DE-T5-112009 001 331
- FR-A1- 2 879 239
- JP-A- 2000 027 627
- JP-A- 2008 163 795
- JP-A- 2009 185 685
- JP-A- 2010 506 075
- JP-A- 2012 002 062

## Description

### TECHNICAL FIELD

The present invention relates to an additive supply device for an internal combustion engine.

### BACKGROUND ART

To purify exhaust of an internal combustion engine, there is known a device to supply an additive to an exhaust passage. According to a device described in Patent Document 1 for example, to reduce and purify nitrogen oxides (NOx) in exhaust by a catalyst, urea aqueous solution is supplied into the exhaust passage.

If the additive is frozen, it becomes difficult to supply the additive into the exhaust passage. Hence, a pump configuring the additive supply device and a supply passage for additive are provided with heating sections for thawing the additive in some cases.

The device described in Patent Document 1 has a thawing control system for heating additive by utilizing engine coolant. After the thawing process of the additive is carried out, a supply module pump is activated. If the pressure in a supply module in the operating pump does not reach a certain value, a warning of trouble of the thawing control system is generated.

The device described in Patent Document 2 is a device for providing a reducing agent for an exhaust system, wherein a system heating for heating of reducing agent is provided and the device comprises at least one heat-conducting member, the heat from the system heating transmits to at least one of the following components: tank, feed line, filter, pump, valve, sensor.

The device described in Patent Document 3 has a heating wire arranged over or a main part of a storage tank and a supplying pipeline for the liquid reducing agent, and an enveloping layer of the heat insulating material is provided thereon, and furthermore, a heating wire heating means is provided in the storage tank at need, and these heating wires are electrified and electrifying is cut from outside in response to the atmospheric temperature and/or reducing agent temperature so as to maintain the appropriate temperature range for preventing the freezing of the liquid reducing agent.

Patent Document 4 relates to a process for starting an SCR system

### PRIOR ART DOCUMENTS

### Patent Documents

Patent Document 1: Japanese Laid-Open Patent Publication No. 2012-2062
Patent Document 2: DE 10 2010 024021 A1
Patent Document 3: JP 2000 027627 A
Patent Document 4: DE 11 2009 001331 T5

### SUMMARY OF THE INVENTION

### Problems that the Invention is to Solve

After the thawing process is carried out, the pump is activated. If the pressure of the additive does not rise in association with the operation of the pump as in the above-described conventional device, it can be determined that the thawing process of the additive is not properly carried out and abnormality has occurred in the heating section provided in the pump or the supply passage. However, according to the conventional device, it is not possible to determine which one of the heating sections provided in the pump and the supply passage has the abnormality.

The present invention has been accomplished in view of the conventional circumstances, and it is an object of the invention to determine which one of the heating sections provided in the pump and the supply passage has an abnormality.

### Means for Solving the Problems

To achieve the foregoing objective and in accordance with the present invention, an additive supply device for an internal combustion engine is provided. The additive supply device includes a tank for storing an additive therein, a pump for delivering the additive in the tank, a supply passage through which the additive delivered from the pump is supplied to an exhaust passage of the internal combustion engine, a pressure detector that detects additive pressure in the supply passage, a pump heating section that heats the additive in the pump, a passage heating section that heats the additive in the supply passage, a heating controller that performs heating control of the pump heating section and the passage heating section, and a signal output section. After heating control of the pump heating section and the passage heating section is started, in a state where the additive pressure in the supply passage when a drive signal is output to the pump has not become higher than the additive pressure in the supply passage before the drive signal is output, the signal output section outputs a signal indicative of an abnormality of the pump heating section if the pump is not operating, and outputs a signal indicative of an abnormality of the passage heating section if the pump is operating.

When an abnormality occurs in the pump heating section, the additive in the pump is not sufficiently thawed even if heating control is carried out by the pump heating section. Therefore, additive delivery from the pump to the supply passage is disrupted. Hence, when an abnormality occurs in the pump heating section, additive pressure in the supply passage when a drive signal is output to the pump is less prone to rise from pressure before the drive signal is output.

When an abnormality occurs in the passage heating section, the additive in the supply passage is not sufficiently thawed even if the heating control is carried out by the passage heating section. When the additive is frozen in the supply passage, the additive pressure in the supply passage is not varied. Hence, when an abnormality occurs in the passage heating section also, the additive pressure in the supply passage when the drive signal is output to the pump is less prone to rise from the pressure before the drive signal is output.

In a state where the additive pressure in the supply passage does not rise even though the drive signal is output to the pump, it can be estimated that the additive in the pump is frozen if the pump is not actually operating. Hence, in this case, the signal output section outputs a signal indicative of an abnormality in the pump heating section.

In contrast, in a state where the additive pressure in the supply passage does not rise even though the drive signal is output to the pump, it can be estimated that the additive in the pump is thawed and the additive in the supply passage is frozen if the pump is actually operating. Hence, in this case, the signal output section outputs a signal indicative of an abnormality of the passage heating section.

As described above, according to the present invention, whether the pump is actually operating is checked, and a signal indicative of an abnormality of the pump heating section and a signal indicative of an abnormality of the passage heating section are individually output. Hence, it is possible to determine which one of the heating sections provided in the pump and the supply passage has an abnormality.

As an output mode of the signal indicative of an abnormality of the pump heating section and a signal indicative of an abnormality of the passage heating section, a warning light can be lit or a warning can be generated by means of sound corresponding to the signal. As an output mode of the signal indicative of an abnormality of the pump heating section and a signal indicative of an abnormality of the passage heating section, a flag value can be set corresponding to the signal.

In accordance with one aspect of the present invention, the additive supply device includes a speed detector that detects rotational speed of the pump. The signal output section detects whether the pump is operating based on the rotational speed. In this case, it is possible to reliably detect whether the pump is operating. When it is detected whether the pump is operating based on rotational speed of the pump, a signal indicating that the pump is operating may be output when the rotational speed of the pump is equal to or higher than a determination value.

In accordance with one aspect of the present invention, the additive supply device includes a tank heating section that heats the additive in the tank. The heating controller also performs heating control of the tank heating section. When a signal indicative of an abnormality of the pump heating section is output from the signal output section, the heating controller carries out heating operation by the tank heating section.

In this case, when there is a possibility that the pump heating section has an abnormality and thawing operation of the additive in the pump is disrupted, heating operation is carried out by the tank heating section, and temperature of the additive in the tank is increased. Since the pump body and the additive in the pump are heated by the heated additive in the tank, the thawing operation of the additive in the pump is facilitated. The heating operation carried out by the tank heating section may be continued until the temperature of the additive in the pump exceeds a reference value, for example, temperature at which it can be estimated that the additive is thawed.

In accordance with one aspect of the present invention, the additive supply device includes a tank heating section that heats the additive in the tank. The heating controller also performs heating control of the tank heating section. A signal indicative of an abnormality of the pump heating section is output from the signal output section, the heating controller increases heating time by the tank heating section to be longer than when the signal indicative of an abnormality of the pump heating section is not output.

In this case, when there is a possibility that the pump heating section has an abnormality and the thawing operation of the additive in the pump is disrupted, heating time carried out by the tank heating section is made long as compared with a case where the pump heating section has no abnormality. By increasing the heating time, temperature of the additive in the tank is further increased. Since the pump body and the additive in the pump are heated by the heated additive in the tank, the thawing operation of the additive in the pump is facilitated.

In accordance with one aspect of the present invention, the additive supply device includes a tank heating section that heats the additive in the tank. The heating controller also performs heating control of the tank heating section. When a signal indicative of an abnormality of the pump heating section is output from the signal output section, the heating controller increases a heating amount of the tank heating section to be greater than when the signal indicative of an abnormality of the pump heating section is not output.

In this case, when there is a possibility that the pump heating section has an abnormality and the thawing operation of the additive in the pump will be disrupted, the heating amount of the tank heating section is increased as compared with a case where the pump heating section has no abnormality. By increasing the heating amount, temperature of the additive in the tank is further increased. Since the pump body and the additive in the pump are heated by the heated additive in the tank, the thawing operation of the additive in the pump is facilitated.

The heating sections, which heat the additive, may be electric heaters.

### BRIEF DESCRIPTION OF THE DRAWINGS

Fig. 1 is a schematic diagram showing an entire configuration of a first embodiment of the present invention;
Fig. 2 is a schematic diagram showing a configuration of a urea aqueous solution supply mechanism in the first embodiment;
Fig. 3 is a flowchart showing a procedure of abnormality diagnosing process in the first embodiment;
Fig. 4 is a flowchart showing a procedure of re-thawing process in a second embodiment;
Fig. 5 shows a modification of the abnormality diagnosing process of the first embodiment, and is a flowchart showing part of a process procedure;
Fig. 6 is a flowchart showing a process procedure in a modification of the re-thawing process of the second embodiment; and
Fig. 7 is a flowchart showing a process procedure in a modification of the re-thawing process of the second embodiment.

### MODES FOR CARRYING OUT THE INVENTION

### First Embodiment

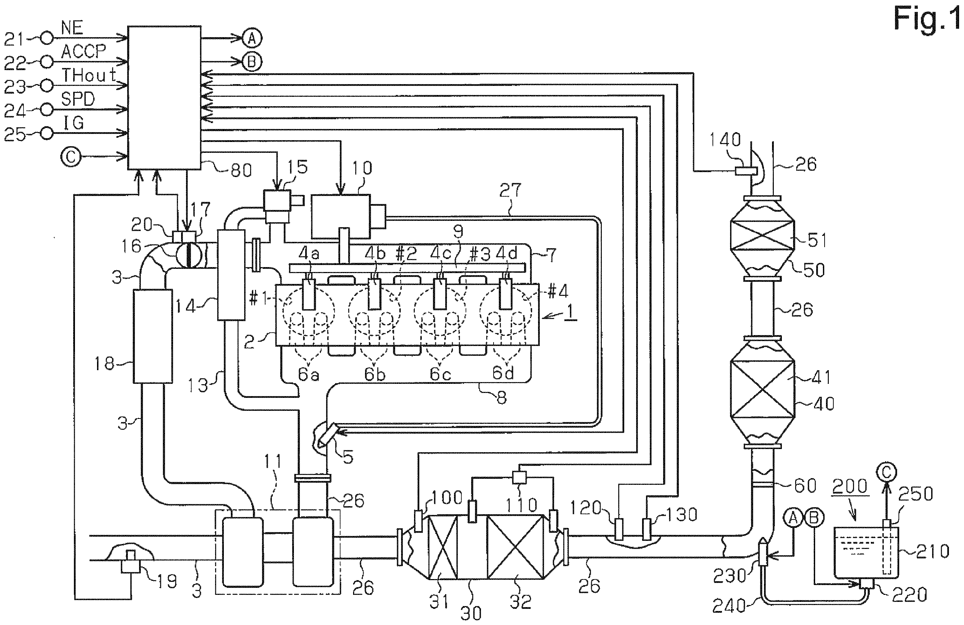

An additive supply device for an internal combustion engine according to a first embodiment of the present invention will be described with reference to Figs. 1 to 3. In the first embodiment, the present invention is applied to a diesel engine (hereinafter, referred to as an engine) provided in a vehicle.

As shown in Fig. 1, an engine 1 includes a plurality of cylinders #1 to #4. A plurality of fuel injection valves 4a to 4d are mounted on a cylinder head 2. The fuel injection valves 4a to 4d inject fuel into combustion chambers of the corresponding cylinders #1 to #4. The cylinder head 2 is provided with intake ports for introducing fresh air into the cylinders and exhaust ports 6a to 6d for discharging combustion gas to outside of the cylinders. The intake ports and the exhaust ports 6a to 6d correspond to the cylinders #1 to #4. An alternator, which generates electricity utilizing engine output, is connected to a crankshaft of the engine 1.

The fuel injection valves 4a to 4d are connected to a common rail 9, which accumulates the pressure of high pressure fuel. The common rail 9 is connected to a supply pump 10. The supply pump 10 draws fuel in a fuel tank and supplies high pressure fuel to the common rail 9. The high pressure fuel supplied to the common rail 9 is injected from the fuel injection valves 4a to 4d into the cylinders when the fuel injection valves 4a to 4d are opened.

An intake manifold 7 is connected to the intake ports. The intake manifold 7 is connected to an intake passage 3. An intake throttle valve 16 for adjusting an intake air amount is provided in the intake passage 3.

An exhaust manifold 8 is connected to the exhaust ports 6a to 6d. The exhaust manifold 8 is connected to an exhaust passage 26.

A turbocharger 11 is provided at a halfway portion of the exhaust passage 26, and the turbocharger 11 supercharges intake air introduced into the cylinders utilizing exhaust pressure. An intercooler 18 is provided on the intake passage 3 between an intake-side compressor of the turbocharger 11 and the intake throttle valve 16. The temperature of the intake air is increased by supercharging operation of the turbocharger 11, but the intercooler 18 cools the intake air.

A first purifying member 30, which purifies exhaust, is provided at a halfway portion of the exhaust passage 26 and downstream of an exhaust-side turbine of the turbocharger 11. An oxidation catalyst 31 and a DPF catalyst 32 are placed in the first purifying member 30 in series with each other in the flowing direction of the exhaust.

A catalyst that oxidizes HC in exhaust is supported by the oxidation catalyst 31. The DPF catalyst 32 is a filter for collecting PM (particulate matter) in exhaust, and includes porous ceramic. The DPF catalyst 32 supports a catalyst that facilitates oxidation of the PM. The PM in exhaust is collected when it passes through porous walls of the DPF catalyst 32.

A fuel addition valve 5 is provided in the vicinity of an aggregation portion of the exhaust manifold 8. The fuel addition valve 5 supplies fuel to the oxidation catalyst 31 and the DPF catalyst 32 as additives. The fuel addition valve 5 is connected to the supply pump 10 through a fuel supply pipe 27. A position where the fuel addition valve 5 is placed can properly be changed as long as it is placed in an exhaust system and upstream of the first purifying member 30.

A second purifying member 40 for purifying exhaust is provided at a halfway portion of the exhaust passage 26 and downstream of the first purifying member 30. A selective reduction NOx catalyst (hereinafter, referred to as a SCR catalyst) 41 is placed in the second purifying member 40 as an exhaust purifying catalyst. The NOx catalyst 41 reduces and purifies NOx in exhaust utilizing a reducing agent.

A third purifying member 50 for purifying exhaust is provided at a halfway portion of the exhaust passage 26 and downstream of the second purifying member 40. An ammonia oxidation catalyst 51 for purifying ammonia in exhaust is placed in the third purifying member 50.

A urea aqueous solution supply mechanism 200 for supplying urea aqueous solution as an additive to the SCR catalyst 41 is provided in the engine 1. The urea aqueous solution supply mechanism 200 includes a tank 210 for reserving urea aqueous solution, a pump 220 for delivering the urea aqueous solution from the tank 210, a urea injection valve 230 for injecting and supplying urea aqueous solution into the exhaust passage 26, a supply pipe 240 as a supply passage for connecting the urea injection valve 230 and the pump 220 to each other, a level sensor 250 for detecting the amount of the urea aqueous solution reserved in the tank 210, and a heater for heating urea aqueous solution in the urea aqueous solution supply mechanism 200.

The urea injection valve 230 is provided in the exhaust passage 26 between the first purifying member 30 and the second purifying member 40, and an injection hole of the urea injection valve 230 opens toward the SCR catalyst 41. When the urea injection valve 230 opens, the urea aqueous solution is injected and supplied into the exhaust passage 26 through the supply pipe 240.

The pump 220 is an electric pump, and when a drive signal is input, the pump 220 is activated to deliver the urea aqueous solution. When the pump 220 rotates forward, the urea aqueous solution is delivered from the tank 210 toward the urea injection valve 230. When the pump 220 is rotated in reverse, the urea aqueous solution is delivered from the urea injection valve 230 toward the tank 210. That is, when the pump 220 is rotated in reverse, the urea aqueous solution is collected from the urea injection valve 230 and the supply pipe 240 and is returned into the tank 210.

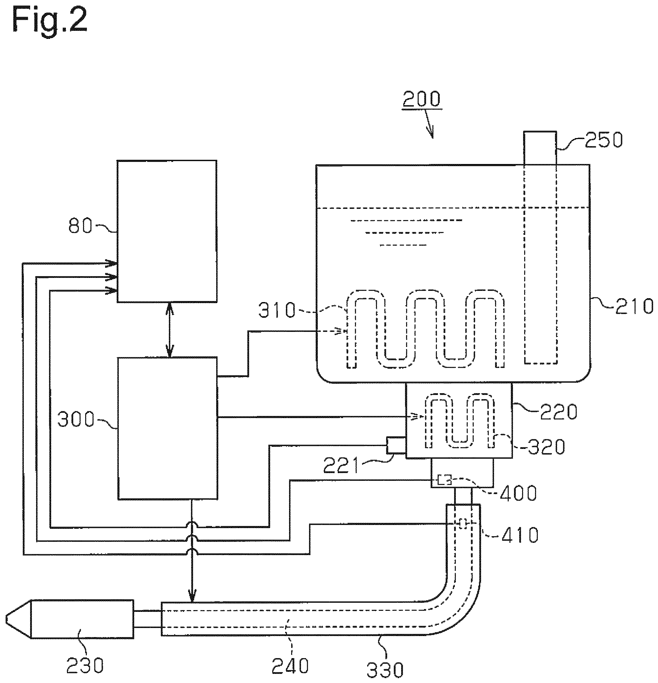

As shown in Fig. 2, in this embodiment, the pump 220 is provided on a bottom surface of the tank 210. The pump 220 may be provided on a side surface of the tank 210 and at part of the tank 210 close to its bottom surface. A rotational speed sensor 221 for detecting pump rotational speed NEP is provided in the pump 220. The pump rotational speed NEP is rotational speed of the pump 220. The rotational speed sensor 221 corresponds to the speed detector.

A tank heater 310 for heating the additive is provided in the tank 210. A pump heater 320 for heating the additive is provided in the pump 220. A passage heater 330 for heating the additive is also provided on an outer periphery of the supply pipe 240. These heaters 310, 320 and 330 are electric heaters. The pump heater 320 corresponds to the pump heating section, the passage heater 330 corresponds to the passage heating section, and the tank heater 310 corresponds to the tank heating section.

The heaters 310, 320 and 330 are connected to a heater control unit 300, and the heater control unit 300 controls power distribution amounts of the heaters 310, 320, and 330. The power distribution amounts of the heaters can be controlled based on an appropriate method. For example, it is possible to use duty control for adjusting a duty ratio of voltage supplied to the heater, voltage control for adjusting the value of voltage supplied to the heater, or current control for adjusting the value of current flowing through the heater. The heater control unit 300 and a later-described control unit 80 are in intercommunication with each other.

A temperature sensor 400 is provided in the vicinity of a discharging portion of the pump 220. The temperature sensor 400 detects urea aqueous solution temperature THN, which is the temperature of the urea aqueous solution in the pump 220. A pressure sensor 410 is provided in the supply pipe 240 in the vicinity of a discharging portion of the pump 220. The pressure sensor 410 detects urea aqueous solution pressure NP, which is the pressure of the urea aqueous solution in the supply pipe 240. The temperature sensor 400 and the pressure sensor 410 are connected to the control unit 80. The pressure sensor 410 corresponds to the pressure detector. The urea aqueous solution temperature THN may directly be detected utilizing the temperature sensor 400 or may indirectly be detected by estimating the urea aqueous solution temperature THN utilizing outside air temperature, for example.

As shown in Fig. 1, a dispersion plate 60 is provided in the exhaust passage 26 between the urea injection valve 230 and the SCR catalyst 41. The dispersion plate 60 facilitates atomization of the urea aqueous solution by dispersing the urea aqueous solution injected from the urea injection valve 230.

If the urea aqueous solution injected from the urea injection valve 230 reaches the SCR catalyst 41, the urea aqueous solution is adsorbed as ammonia. NOx is reduced and purified by the ammonia adsorbed by the SCR catalyst 41.

The engine 1 also includes an exhaust gas recirculation device (hereinafter, referred to as an EGR system). The EGR system introduces some of exhaust into intake air, thereby reducing combustion temperature in the cylinders and reducing the generation amount of NOx. This exhaust gas recirculation system includes an EGR passage 13, which brings the intake passage 3 and the exhaust manifold 8 into communication with each other, an EGR valve 15 provided in the EGR passage 13, and an EGR cooler 14. By adjusting the opening degree of the EGR valve 15, an exhaust recirculation amount, that is, what is called an exterior EGR amount introduced from the exhaust passage 26 into the intake passage 3 is adjusted. The temperature of exhaust flowing through the EGR passage 13 is reduced by the EGR cooler 14.

Various kinds of sensors and switches for detecting the engine operational state are mounted on the engine 1. For example, an air flow meter 19 detects an intake air amount GA in the intake passage 3. A throttle valve opening degree sensor 20 detects the opening degree of the intake throttle valve 16. An engine speed sensor 21 detects the rotational speed of the crankshaft, i.e., engine speed NE. An accelerator operation amount sensor 22 detects a depressing amount of an accelerator pedal (accelerator operating member), that is, an accelerator operation amount ACCP. An outside air temperature sensor 23 detects outside air temperature THout. A vehicle speed sensor 24 detects vehicle speed SPD of a vehicle provided with the engine 1. An ignition switch 25 detects starting operation and stopping operation of the engine 1 carried out by the driver of the vehicle.

A first exhaust temperature sensor 100 provided upstream of the oxidation catalyst 31 detects first exhaust temperature TH1, which is exhaust temperature before exhaust flows into the oxidation catalyst 31. A differential pressure sensor 110 detects a pressure difference ΔP between the exhaust pressure upstream of the DPF catalyst 32 and the exhaust pressure downstream of the DPF catalyst 32.

A second exhaust temperature sensor 120 and a first NOx sensor 130 are provided in the exhaust passage 26 between the first purifying member 30 and the second purifying member 40 and upstream of the urea injection valve 230. The second exhaust temperature sensor 120 detects second exhaust temperature TH2, which is the exhaust temperature before the exhaust flows into the SCR catalyst 41. The first NOx sensor 130 detects first NOx concentration N1, which is the NOx concentration in the exhaust before the exhaust flows into the SCR catalyst 41.

A second NOx sensor 140 is provided in the exhaust passage 26 downstream of the third purifying member 50. The second NOx sensor 140 detects second NOx concentration N2, which is the NOx concentration in the exhaust that has passed through the SCR catalyst 41.

Output from the various kinds of sensors is input to the control unit 80 as the controller. The control unit 80 is mainly composed of a microcomputer including a central processing unit (CPU), a read only memory (ROM), which previously stores various kinds of programs and maps, a random access memory (RAM), which temporarily stores computation results of the CPU, a timer counter, an input interface, an output interface, and the like.

The control unit 80 performs various kinds of controls of the engine 1 such as control of a fuel injection amount and control of fuel injection timing of the fuel injection valves 4a to 4d and the fuel addition valve 5, control of discharge pressure of the supply pump 10, control of a driving amount of an actuator 17 which opens and closes the intake throttle valve 16, and control of an opening degree of the EGR valve 15, for example.

The control unit 80 also performs control of addition of urea aqueous solution carried out by the urea injection valve 230 as one of exhaust purifying controls. In the control of addition, a supply amount of urea aqueous solution, which is necessary for reducing process of NOx discharged from the engine 1, is calculated. An opened state of the urea injection valve 230 is controlled so that the calculated supply amount of urea aqueous solution is injected from the urea injection valve 230. During operation of the engine 1, the urea aqueous solution is supplied to the exhaust passage 26 for purifying NOx.

The control unit 80 also performs control for driving the pump 220 by outputting a drive signal to the pump 220.

The control unit 80 performs heating control of the heaters 310, 320 and 330 through a heater control unit 300. That is, the control unit 80 determines a frozen state of urea aqueous solution based on urea aqueous solution temperature THN. When the urea aqueous solution is frozen and it is impossible to supply the urea aqueous solution into the exhaust passage 26, the heaters 310, 320 and 330 are energized through the heater control unit 300 to thaw the urea aqueous solution. The heater control unit 300 and the control unit 80 which performs the heating control correspond to the heating controllers.

In this embodiment, the additive supply device includes the pump heater 320 and the passage heater 330, and if the heaters 320 and 330 have an abnormality, the urea aqueous solution in the pump 220 or the supply pipe 240 cannot be heated even if the heating control is carried out, and it becomes difficult to thaw the urea aqueous solution. Hence, in this embodiment, when the heater provided in the pump or the supply pipe 240 has an abnormality, the following abnormality diagnosing process is carried out so that it is possible to determine which heater has an abnormality.

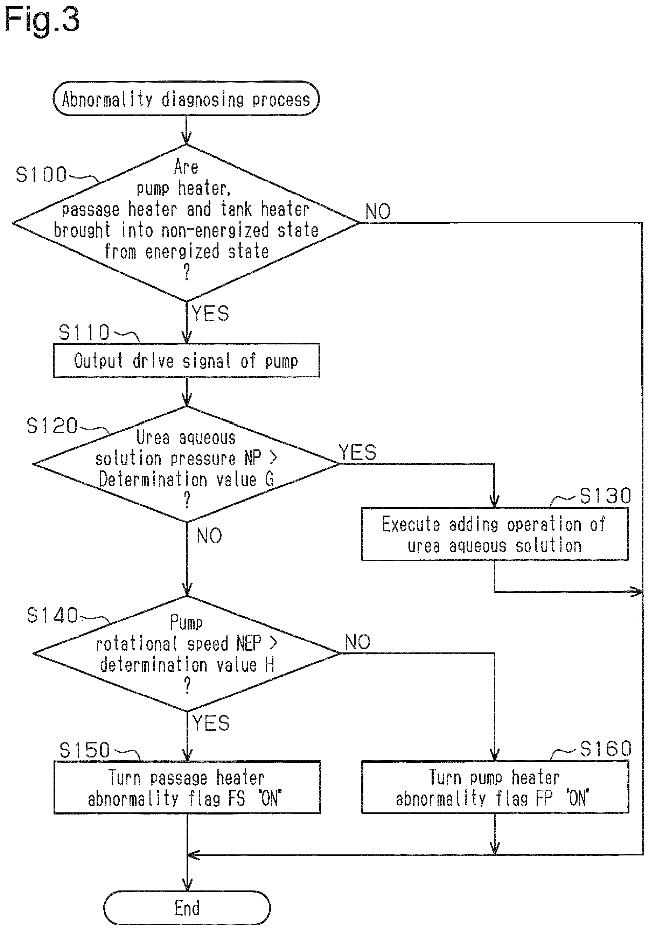

Fig. 3 shows a procedure of the abnormality diagnosing process. This process is repeatedly executed by the control unit 80. When executing the abnormality diagnosing process, the control unit corresponds to the signal output section.

When this process is started, it is first determined whether the pump heater 320, the passage heater 330, and the tank heater 310 have been brought into non-energized states from energized states (S100). If a negative determination is made in step 100, the process is temporarily suspended.

If a positive determination is made in step S100, it is determined that the current time is after the heating control of the pump heater 320, the passage heater 330, and the tank heater 310 was started. More precisely, it is determined that the current time is after the heating control was started and this heating control has been completed.

Next, a drive signal is output to the pump 220 (S110).

If the drive signal is output to the pump 220, it is determined whether the urea aqueous solution pressure NP in the supply pipe 240 exceeds a determination value G (S120). The magnitude of this determination value G is set such that it is possible to reliably determine that the urea aqueous solution pressure NP when the drive signal is output to the pump 220 has become higher than the pressure before the drive signal is output based on the fact that the urea aqueous solution pressure NP has become higher than the determination value G.

When the urea aqueous solution pressure NP exceeds the determination value G (S120: YES), it is determined that the urea aqueous solution is thawed, and urea is added unless urea aqueous solution addition-prohibition is requested (S130). Then, this process is temporarily suspended.

In contrast, when the urea aqueous solution pressure NP is less than the determination value G (S120: NO), it is determined that the urea aqueous solution pressure NP is not increased by the operation of the pump 220. Next, it is determined whether the pump rotational speed NEP exceeds a determination value H (S140). The magnitude of the determination value H is set such that it is possible to reliably determine that the pump 220 is actually operating based on the fact that the pump rotational speed NEP has become higher than the determination value H.

When the pump rotational speed NEP exceeds the determination value H (S140: YES), it is determined that the pump 220 is actually operating. As process for outputting a signal indicating that the passage heater 330 has an abnormality, a passage heater abnormality flag FS is changed from OFF to ON (S150). A value (ON or OFF) of the passage heater abnormality flag FS is stored in the memory, which is a storage device of the control unit 80. Then, this process is temporarily suspended.

When the pump rotational speed NEP is equal to or lower than the determination value H (S140: NO), it is determined that the pump 220 is not actually operating. As process for outputting a signal indicating that the pump heater 320 has an abnormality, a pump heater abnormality flag FP is changed from OFF to ON (S160). A value (ON or OFF) of the pump heater abnormality flag FP is also stored in the memory, which is the storage device of the control unit 80. Then, this process is temporarily suspended.

Next, operation of the abnormality diagnosing process will be described.

When the pump heater 320 has an abnormality, since urea aqueous solution in the pump 220 is not sufficiently thawed even if the heating control is carried out by the pump heater 320, the delivering operation of the urea aqueous solution from the pump 220 to the supply pipe 240 is disrupted. Hence, when the pump heater 320 has an abnormality, the urea aqueous solution pressure NP in the supply pipe 240 when a drive signal is output to the pump 220 is less prone to rise from the pressure before the drive signal is output.

When the passage heater 330 has an abnormality, the urea aqueous solution in the supply pipe 240 is not sufficiently thawed even if heating control is carried out by the passage heater 330. When the urea aqueous solution is frozen in the supply pipe 240 in this manner, the urea aqueous solution pressure NP in the supply pipe 240 is not varied. Hence, also when the passage heater 330 has an abnormality, the urea aqueous solution pressure NP when a drive signal is output to the pump 220 is less prone to rise from the pressure before the drive signal is output.

In a state where the urea aqueous solution pressure NP in the supply pipe 240 does not rise although a drive signal is output to the pump 220, if the pump 220 is not actually operating, it can be estimated that the urea aqueous solution in the pump 220 is frozen. Hence, in this abnormality diagnosing process, when it can be determined that the current time is after the heating control was started by the pump heater 320 and the passage heater 330 (S100: YES), a drive signal is output to the pump 220 (S110). When it is determined that the urea aqueous solution pressure NP in the supply pipe 240 does not rise although the drive signal is output to the pump 220 (S120: NO), it is determined whether the pump 220 is actually operating based on the pump rotational speed NEP (S140). When it is determined that the pump 220 is not actually operating (S140: NO), the pump heater abnormality flag FP is set to ON (S160) since it can be estimated that the urea aqueous solution in the pump 220 is frozen.

In contrast, in a state where the urea aqueous solution pressure NP in the supply pipe 240 does not rise although the drive signal is output to the pump 220, if the pump 220 is actually operating, it can be estimated that the urea aqueous solution in the pump 220 is thawed and the urea aqueous solution in the supply pipe 240 is frozen. Hence, in this abnormality diagnosing process, if it can be determined that the current time is after the heating operation was carried out by the pump heater 320 and the passage heater 330 (S100: YES), the drive signal is output to the pump 220 (S110). When it is determined that the urea aqueous solution pressure NP in the supply pipe 240 does not rise although the drive signal is output to the pump 220 (S120: NO), it is determined whether the pump 220 is actually operating based on the pump rotational speed NEP (S140). If it is determined that the pump 220 is actually operating (S140: YES), since it can be estimated that the urea aqueous solution in the supply pipe 240 is frozen, the passage heater abnormality flag FS is set to ON (S150).

In this manner, whether the pump 220 is actually operating is checked. Then, the pump heater abnormality flag FP indicative of an abnormality of the pump heater 320 and the passage heater abnormality flag FS indicative of an abnormality of the passage heater 330 are individually output. Therefore, it is possible to determine which one of the heaters provided in the pump 220 and the supply pipe 240 has an abnormality.

As described above, according to the first embodiment, the following advantages are obtained.
(1) In a state where the urea aqueous solution pressure NP when the drive signal is output to the pump 220 does not rise from the pressure before the drive signal is output after the heating control of the pump heater 320 and the passage heater 330 was started, if the pump 220 is not operating, the pump heater abnormality flag FP indicative of an abnormality of the pump heater 320 is set to ON, and if the pump 220 is operating, the passage heater abnormality flag FS indicative of an abnormality of the passage heater 330 is set to ON. Therefore, it is possible to determine which one of the heaters provided in the pump 220 and the supply pipe 240 has an abnormality.
(2) The additive supply device has the rotational speed sensor 221, which detects the pump rotational speed NEP, and it is detected whether the pump 220 is operating based on the pump rotational speed NEP. Hence, it is possible to reliably detect whether the pump 220 is operating.

### Second Embodiment

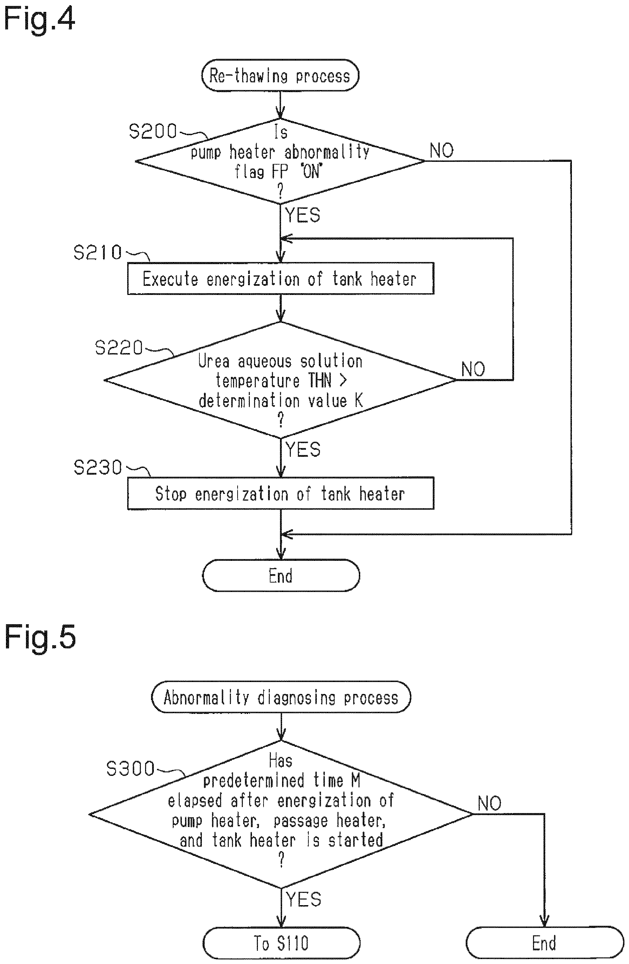

Next, an additive supply device for an internal combustion engine according to a second embodiment of the present invention will be described with reference to Fig. 4.

As described above, when the pump heater 320 has an abnormality, the urea aqueous solution in the pump 220 cannot be thawed at an early stage. Hence, urea cannot be added until the urea aqueous solution in the pump 220 is naturally thawed, and there is concern that the purifying operation of NOx may be disrupted.

Hence, in this embodiment, when the pump heater abnormality flag FP is set to ON in the abnormality diagnosing process, the following re-thawing process is executed.

Fig. 4 shows procedure of the re-thawing process. This process is also repeatedly executed by the control unit 80.

When this process is started, it is first determined whether the pump heater abnormality flag FP is ON (S200). When the pump heater abnormality flag FP is OFF (S200: NO), this process is temporarily suspended.

When the pump heater abnormality flag FP is ON (S200: YES), the tank heater 310, which is in the non-energized state, is energized (S210).

Next, it is determined whether the urea aqueous solution temperature THN exceeds a determination value K (S220). This determination value K is set to temperature at which it can be estimated that the urea aqueous solution in the pump 220 is thawed, for example, temperature that is slightly higher than melting temperature of the urea aqueous solution. When the urea aqueous solution temperature THN is equal to or lower than the determination value K (S220: NO), energization of the tank heater 310 in step S210 and determination of temperature in step S220 are repeatedly executed until the urea aqueous solution temperature THN exceeds the determination value K.

If the urea aqueous solution temperature THN exceeds the determination value K (S220: YES), the energization of the tank heater 310 is stopped (S230), and this process is temporarily suspended.

Next, operation of the re-thawing process will be described.

When the pump heater 320 has an abnormality and the pump heater abnormality flag FP is ON (S200: YES), heating operation of the tank 210 is carried out by the tank heater 310 (S210). If the heating operation is carried out by the tank heater 310, temperature of the urea aqueous solution in the tank 210 rises. By the heated urea aqueous solution in the tank 210, the pump 220 provided on the bottom surface of the tank 210 and the urea aqueous solution in the pump 220 are heated. Therefore, even if the pump heater 320 has an abnormality, thawing operation of the urea aqueous solution in the pump 220 is facilitated.

Since energization of the tank heater 310 is continued until the urea aqueous solution temperature THN in the pump 220 exceeds the determination value K, the urea aqueous solution in the pump 220 is properly thawed.

As described above, according to the second embodiment, the following advantage is obtained.
(3) The additive supply device includes the tank 210, which stores the urea aqueous solution and has the pump 220, and the tank heater 310, which heats the urea aqueous solution in the tank 210. When the pump heater abnormality flag FP is ON, the heating operation is carried out by the tank heater 310. Since the pump 220 and the urea aqueous solution in the pump 220 are heated by the heated urea aqueous solution in the tank 210, thawing operation of the urea aqueous solution in the pump 220 is facilitated.

The above-described embodiments may be modified as follows and can be put into execution.
· To determine whether the pump 220 is actually operating, the pump rotational speed NEP is detected, but it is possible to determine whether the pump 220 is operating by other methods. For example, it is possible to provide a sensor that only determines whether the pump 220 is rotating.
· Although the urea aqueous solution temperature in the pump 220 is detected as the urea aqueous solution temperature THN, urea aqueous solution temperature in the tank 210 or urea aqueous solution temperature in the supply pipe 240 may be detected. In these modifications also, if the tank heater 310 is energized until the urea aqueous solution temperature in the tank 210 or the urea aqueous solution temperature in the supply pipe 240 reaches the predetermined value in the second embodiment, it is possible to facilitate the thawing operation of the urea aqueous solution in the pump 220.
· In the second embodiment, the tank heater 310 is energized until the urea aqueous solution temperature THN exceeds the determination value K. Alternatively, energization time of the tank heater 310 may previously be set.
· As an output mode of a signal indicative of an abnormality of the pump heater 320 or a signal indicative of an abnormality of the passage heater 330, flag values such as the pump heater abnormality flag FP and the passage heater abnormality flag FS are set, but the signals may be output in other modes. For example, warning lights may individually be lit or a warning may individually be generated by means of sound corresponding to the signal indicative of an abnormality of the pump heater 320 or the signal indicative of an abnormality of the passage heater 330.
· An arrangement position of the pressure sensor 410 may arbitrarily be changed as long as the position is within the supply pipe 240.
· In the first embodiment, by determining whether the pump heater 320, the passage heater 330, and the tank heater 310 are brought into the non-energized states from the energized states in step S100 in Fig. 3, it is determined whether the current time is after heating control of the pump heater 320 and the passage heater 330 was started. More precisely, it is determined whether the current time is after the heating control was started and this heating control has been completed.

On the other hand, in the abnormality diagnosing process, process in step S110 and subsequent steps can be carried out even if the heating control has not been completed and is being executed. That is, if a history of execution of the heating control exists, process in step S110 and subsequent steps can be carried out, and the same advantages as those of the embodiment are obtained.

For example, when it is determined whether the current time is after the heating control of the pump heater 320 and the passage heater 330 was started, it is possible to determine whether the current time is after the heating control was started and the heating control is being executed.

This modification can be put into execution by carrying out process in step S300 shown in Fig. 5 instead of process in step S100 shown in Fig. 3, for example.

As shown in Fig. 5, it is determined in step S300 whether predetermined time M has elapsed after energization of the pump heater 320, the passage heater 330, and the tank heater 310 was started. The predetermined time M is set to the following value.

That is, when all of the pump heater 320, the passage heater 330, and the tank heater 310 operate normally, the urea aqueous solution in each of the pump 220, the supply pipe 240, and the tank 210 is thawed as time elapsed after the energization of the pump heater 320, the passage heater 330, and the tank heater 310 was started becomes longer. Therefore, based on the time elapsed after the energization of the heaters was started, it is possible to determine whether the urea aqueous solution is brought into a state where it can be added. Hence, the magnitude of the predetermined time M is set to such a value that it can reliably be determined that the urea aqueous solution can be added based on the fact that the time elapsed after energization of the pump heater 320, the passage heater 330, and the tank heater 310 was started reaches this predetermined time M. The predetermined time M can be set to time required for thawing the urea aqueous solution in all of the pump 220, the supply pipe 240, and the tank 210, or to set time required for thawing part of the urea aqueous solution in each of the pump 220, the supply pipe 240, and the tank 210 to such an extent that the urea aqueous solution can be added. When energization time of the pump heater 320, the passage heater 330, and the tank heater 310 is previously set, if the predetermined time M is set to time which is shorter than the energization time, it is possible to properly determine that the current time is after the heating control was started and the heating control is being executed.

If a negative determination is made in step S300, it is determined that the urea aqueous solution has not been thawed to such an extent that it can be added, and the abnormality diagnosing process is temporarily suspended.

If a positive determination is made in step S300, it is determined that the current time is after the heating control of the pump heater 320 and the passage heater 330 was started. More precisely, it is determined that the current time is after the heating control was started, the heating control is being executed, and the urea aqueous solution has been thawed to such an extent that it can be added. If a positive determination is made in this step, process in step S110 and subsequent steps shown in Fig. 3 are carried out.

According to this modification also, the same advantages as those of the first embodiment are obtained.
· In the second embodiment, when the pump heater abnormality flag FP is ON, energization of the tank heater 310, which has been in the non-energized state, is again started to facilitate the thawing operation of the urea aqueous solution in the pump 220. Alternatively, if the value of the pump heater abnormality flag FP is set to ON when the heating control is being executed and the tank heater 310 is energized as in the above-described modification shown in Fig. 5, it is possible to facilitate the thawing operation of the urea aqueous solution in the pump 220 by the following modification.

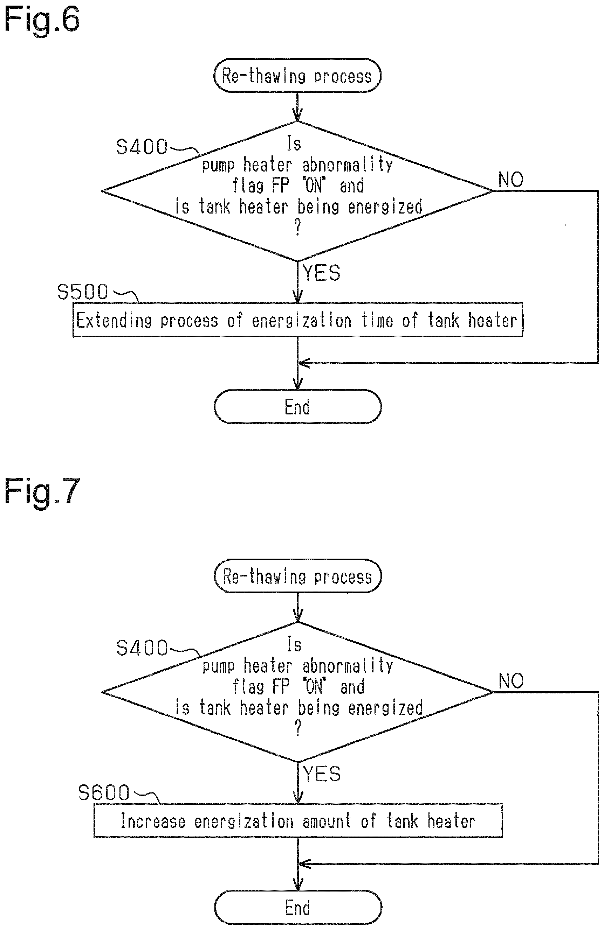

As shown in Fig. 6 for example, in the re-thawing process in this modification, the control unit 80 determines whether the pump heater abnormality flag FP is ON, and the tank heater 310 is being energized (S400). When the pump heater abnormality flag FP is OFF or when the tank heater 310 is in the non-energized state (S400: NO), the control unit 80 temporarily suspends this process.

When the pump heater abnormality flag FP is ON and the tank heater 310 is being energized (S400: YES), the control unit 80 carries out process for extending the energization time of the tank heater 310 (S500), and temporarily suspends this process. The extending process executed in step S500 extends heating time carried out by the tank heater 310 when the pump heater 320 has an abnormality to be longer than when the pump heater 320 has no abnormality. For example, when energization time of the tank heater 310 is preset, this extending process is carried out by increasing the energization time by the preset time. When energization of the tank heater 310 is continued until the temperature of the urea aqueous solution reaches preset determination temperature, the extending process is carried out by increasing the determination temperature by the preset temperature.

In this modification, when the pump heater 320 has an abnormality and there is a possibility that the thawing operation of the urea aqueous solution in the pump 220 is disrupted, the heating time by the tank heater 310 is made longer than when the pump heater 320 has no abnormality. By extending the heating time, the temperature of the urea aqueous solution in the tank 210 is further increased. Since the body of the pump 220 and the urea aqueous solution in the pump 220 are heated by the heated urea aqueous solution in the tank 210, thawing operation of the urea aqueous solution in the pump 220 is facilitated.

As shown in Fig. 7 for example, in another re-thawing process in a modification of the second embodiment, the control unit 80 first determines whether the pump heater abnormality flag FP is ON and the tank heater 310 is currently being energized (S400). When the pump heater abnormality flag FP is OFF or when the tank heater 310 is in a non-energized state (S400: NO), the control unit 80 temporarily suspends this process.

If the pump heater abnormality flag FP is ON and the tank heater 310 is being energized on the other hand (S400: YES), the control unit 80 carries out increasing process for increasing a power distribution amount of the tank heater 310 (S600), and temporarily suspends this process. The increasing process of the power distribution amount executed in step S600 is for increasing, when the pump heater 320 has an abnormality, a heating amount of the tank heater 310 to be greater than when the pump heater 320 has no abnormality. For example, when the power distribution amount of the tank heater 310 is set to a fixed value or when the power distribution amount is variably set in accordance with the temperature of the urea aqueous solution, the increasing process is carried out such that the power distribution amount that is set to the fixed value or to the variable value becomes greater, when the pump heater abnormality flag FP is ON, than when the flag FP is OFF.

In this modification, when the pump heater 320 has an abnormality and there is a possibility that thawing operation of the urea aqueous solution in the pump 220 is disrupted, the heating amount of the tank heater 310 is increased to be greater than when the pump heater 320 has no abnormality. By increasing the heating amount, the temperature of the urea aqueous solution in the tank 210 is further increased. Since the body of the pump 220 and the urea aqueous solution in the pump 220 are heated by the heated urea aqueous solution in the tank 210, thawing operation of the urea aqueous solution in the pump 220 is facilitated.
· As the heating section that heats the urea aqueous solution, an electric heater is utilized. Alternatively, as other heating sections, the pump 220, the supply pipe 240, or the tank 210 may be provided with a coolant passage that can be heated by coolant of the engine. In this modification also, when the pump 220 or the supply pipe 240 is not normally heated by coolant, it is possible to determine which one of heating sections provided in a pump and a supply passage according to the present invention has an abnormality.

In the embodiments, the cases are described in which the present invention is applied to the additive supply device using, as an additive, urea aqueous solution, which is a reducing agent. However, the invention may also be likewise applied to additive supply devices using other additives.

### DESCRIPTION OF THE REFERENCE NUMERALS

1 ... engine, 2 ... cylinder head, 3 ... intake passage, 4a to 4d ... fuel injection valve, 5 ... fuel addition valve, 6a to 6d ... exhaust port, 7 ... intake manifold, 8 ... exhaust manifold, 9 ... common rail, 10 ... supply pump, 11 ... turbocharger, 13 ... EGR passage, 14 ... EGR cooler, 15 ... EGR valve, 16 ... intake throttle valve, 17 ... actuator, 18 ... intercooler, 19 ... air flow meter, 20 ... throttle valve opening degree sensor, 21 ... engine speed sensor, 22 ... accelerator operation amount sensor, 23 ... outside air temperature sensor, 24 ... vehicle speed sensor, 25 ... ignition switch, 26 ... exhaust passage, 27 ... fuel supply pipe, 30 ... first purifying member, 31 ... oxidation catalyst, 32 ... filter, 40 ... second purifying member, 41 ... NOx purifying catalyst (selective reduction type NOx catalyst: SCR catalyst), 50 ... third purifying member, 51 ... ammonia oxidation catalyst, 60 ... dispersion plate, 80 ... control unit, 100 ... first exhaust temperature sensor, 110 ... differential pressure sensor, 120 ... second exhaust temperature sensor, 130 ... first NOx sensor, 140 ... second NOx sensor, 200 ... urea aqueous solution supply mechanism, 210 ... tank, 220 ... pump, 221 ... rotational speed sensor, 230 ... urea injection valve, 240 ... supply pipe, 250 ... level sensor, 300 ... heater control unit, 310 ... tank heater, 320 ... pump heater, 330 ... passage heater, 400 ... temperature sensor, 410 ... pressure sensor.

## Claims

1. An additive supply device (200) for an internal combustion engine, comprising:
a tank (210) for storing an additive therein;
a pump (220) for delivering the additive in the tank (210);
a supply passage (240) through which the additive delivered from the pump (220) is supplied to an exhaust passage (26) of the internal combustion engine;
a pressure detector (410) that detects additive pressure in the supply passage (240),
a pump heating section (320) that heats the additive in the pump (220);
a passage heating section (330) that heats the additive in the supply passage (240);
a tank heating section (310) that heats the additive in the tank (210);
a heating controller (300) that performs heating control of the pump heating section (320), the passage heating section (330), and the tank heating section (310); and
a signal output section (80) configured to, wherein, after heating control of the pump heating section (320) and the passage heating section (330) is started, in a state where the additive pressure in the supply passage (240), when a drive signal is output to the pump (220), has not become higher than the additive pressure in the supply passage (240) before the drive signal is output, the signal output section (80) outputs a signal indicative of an abnormality of the pump heating section (320) if the pump (220) is not operating, and outputs a signal indicative of an abnormality of the passage heating section (330) if the pump (220) is operating,
wherein, when a signal indicative of an abnormality of the pump heating section (320) is output from the signal output section (80), the heating controller (300) starts heating operation by the tank heating section (310).

2. The additive supply device (200) for an internal combustion engine according to claim 1, wherein the heating controller (300) carries out heating operation by the tank heating section (310) until the temperature of the additive in the pump (220) exceeds a reference value.

3. The additive supply device (200) for an internal combustion engine according to claim 1, wherein, when a signal indicative of an abnormality of the pump heating section (320) is output from the signal output section (80), the heating controller (300) increases heating time by the tank heating section (310) to be longer than when the signal indicative of an abnormality of the pump heating section (320) is not output.

4. The additive supply device (200) for an internal combustion engine according to claim 1, wherein, when a signal indicative of an abnormality of the pump heating section (320) is output from the signal output section (80), the heating controller (300) increases a heating amount of the tank heating section (310) to be greater than when the signal indicative of an abnormality of the pump heating section (320) is not output.

5. The additive supply device (200) for an internal combustion engine according to any one of claims 1 to 4, further comprising a speed detector (221) that detects rotational speed of the pump (220),
wherein the signal output section (80) detects whether the pump (220) is operating based on the rotational speed.

6. The additive supply device (200) for an internal combustion engine according to any one of claims 1 to 5, wherein the heating sections (310, 320, 330), which heat the additive, are electric heaters.

## Patentansprüche

1. Additivbeigabevorrichtung (200) für eine Verbrennungskraftmaschine, aufweisend:
einen Tank (210) zum Speichern eines Additivs darin;
eine Pumpe (220) zum Befördern des Additivs in den Tank (210);
eine Zuführleitung (240), durch die das Additiv, das von der Pumpe (220) befördert wird, einer Abgasleitung (26) der Verbrennungskraftmaschine zugeführt wird;
einen Druckdetektor (410), der einen Additivdruck in der Zuführleitung (240) erfasst;
einen Pumpheizabschnitt (320), der das Additiv in der Pumpe (220) heizt;
einen Leitungsheizabschnitt (330), der das Additiv in der Zuführleitung (240) heizt;
einen Tankheizabschnitt (310), der das Additiv in dem Tank (210) heizt;
eine Heizsteuerung (300), die eine Heizsteuerung des Pumpheizabschnitts (320), des Leitungsheizabschnitts (330) und des Tankheizabschnitts (310) durchführt; und
einen Signalausgabeabschnitt (80), der so konfiguriert ist, dass er, nachdem die Heizsteuerung des Pumpheizabschnitts (320) und des Leitungsheizabschnitts (330) gestartet wurde, in einem Zustand, bei dem der Additivdruck in der Zuführleitung (240), wenn ein Antriebssignal an die Pumpe (220) ausgegeben wird, nicht höher gestiegen ist als der Additivdruck in der Zuführleitung (240), bevor das Antriebssignal ausgegeben wurde, ein Signal ausgibt, das eine Störung des Pumpheizabschnitts (320) anzeigt, falls die Pumpe (220) nicht in Betrieb ist, und ein Signal ausgibt, das eine Störung des Leitungsheizabschnitts (330) anzeigt, wenn die Pumpe (220) in Betrieb ist,
wobei, wenn ein Signal, das eine Störung des Pumpheizabschnitts (320) anzeigt, von dem Signalausgabeabschnitt (80) ausgegeben wird, die Heizsteuerung (300) einen Heizvorgang durch den Tankheizabschnitt (310) startet.

2. Additivbeigabevorrichtung (200) für eine Verbrennungskraftmaschine nach Anspruch 1, wobei die Heizsteuerung (300) den Heizvorgang durch den Tankheizabschnitt (310) durchführt, bis die Temperatur des Additivs in der Pumpe (220) einen Referenzwert übersteigt.

3. Additivbeigabevorrichtung (200) für eine Verbrennungskraftmaschine nach Anspruch 1, wobei, wenn von dem Signalausgabeabschnitt (80) ein Signal ausgegeben wird, das eine Störung des Pumpheizabschnitts (320) anzeigt, die Heizsteuerung (300) die Heizzeit durch den Tankheizabschnitt (310) so verlängert, dass sie länger ist als in dem Fall, bei dem das Signal, das eine Störung des Pumpheizabschnitts (320) anzeigt, nicht ausgegeben wird.

4. Additivbeigabevorrichtung (200) für eine Verbrennungskraftmaschine nach Anspruch 1, wobei, wenn ein Signal von dem Signalausgabeabschnitt (80) ausgegeben wird, das eine Störung des Pumpheizabschnitts (320) anzeigt, die Heizsteuerung (300) eine Heizmenge des Tankheizabschnitts (310) so erhöht, dass sie größer ist als in dem Fall, bei dem das Signal, das eine Störung des Pumpheizabschnitts (320) anzeigt, nicht ausgegeben wird.

5. Additivbeigabevorrichtung (200) für eine Verbrennungskraftmaschine nach einem der Ansprüche 1 bis 4, ferner aufweisend einen Drehzahldetektor (221), der eine Drehzahl der Pumpe (220) erfasst, wobei der Signalausgabeabschnitt (80) auf Basis der Drehzahl erfasst, ob die Pumpe (220) läuft.

6. Additivbeigabevorrichtung (200) für eine Verbrennungskraftmaschine nach einem der Ansprüche 1 bis 5, wobei die Heizabschnitte (310, 320, 330), die das Additiv heizen, elektrische Heizungen sind.

## Revendications

1. Dispositif d'alimentation en additif (200) pour un moteur à combustion interne comprenant :
un réservoir (210) pour y stocker un additif ;
une pompe (220) pour distribuer l'additif dans le réservoir (210) ;
un passage d'alimentation (240) à travers lequel l'additif distribué à partir de la pompe (220) est amené à un passage d'échappement (26) du moteur à combustion interne ;
un détecteur de pression (410) qui détecte la pression d'additif dans le passage d'alimentation (240),
une section de chauffage de pompe (320) qui chauffe l'additif dans la pompe (220) ;
une section de chauffage de passage (330) qui chauffe l'additif dans le passage d'alimentation (240) ;
une section de chauffage de réservoir (310) qui chauffe l'additif dans le réservoir (210) ;
un organe de commande de chauffage (300) qui réalise la commande de chauffage de la section de chauffage de pompe (320), la section de chauffage de passage (330), et la section de chauffage de réservoir (310) ; et
une section de sortie de signal (80) configurée pour,
dans lequel, après que la commande de chauffage de la section de chauffage de pompe (320) et de la section de chauffage de passage (330) a commencé, dans un état dans lequel la pression d'additif dans le passage d'alimentation (240), lorsqu'un signal d'entraînement est transmis à la pompe (220), n'est pas devenue supérieure à la pression d'additif dans le passage d'alimentation (240) avant que le signal d'entraînement ne soit transmis, la section de sortie de signal (80) produit un signal indiquant une anomalie de la section de chauffage de pompe (320) si la pompe (220) ne fonctionne pas, et produit un signal indiquant une anomalie de la section de chauffage de passage (330) si la pompe (220) fonctionne,
dans lequel, lorsqu'un signal indiquant une anomalie de la section de chauffage de pompe (320) est émis à partir de la section de sortie de signal (80), l'organe de commande de chauffage (300) commence l'opération de chauffage par la section de chauffage de réservoir (310).

2. Dispositif d'alimentation en additif (200) pour un moteur à combustion interne selon la revendication 1, dans lequel l'organe de commande de chauffage (300) réalise l'opération de chauffage par la section de chauffage de réservoir (310) jusqu'à ce que la température de l'additif dans la pompe (220) dépasse une valeur de référence.

3. Dispositif d'alimentation en additif (200) pour un moteur à combustion interne selon la revendication 1, dans lequel, lorsqu'un signal indiquant une anomalie de la section de chauffage de pompe (320) est émis à partir de la section de sortie de signal (80), l'organe de commande de chauffage (300) augmente le temps de chauffage par la section de chauffage de réservoir (310) pour qu'il soit plus long lorsque le signal indiquant une anomalie de la section de chauffage de pompe (320) n'est pas produit.

4. Dispositif d'alimentation en additif (200) pour un moteur à combustion interne selon la revendication 1, dans lequel, lorsqu'un signal indiquant une anomalie de la section de chauffage de pompe (320) est émis par la section de sortie de signal (80), l'organe de commande de chauffage (300) augmente une quantité de chauffage de la section de chauffage de réservoir (310) pour qu'elle soit plus importante que lorsque le signal indiquant une anomalie de la section de chauffage de pompe (320) n'est pas produit.

5. Dispositif d'alimentation en additif (200) pour un moteur à combustion interne selon l'une quelconque des revendications 1 à 4, comprenant en outre un détecteur de vitesse (221) qui détecte la vitesse de rotation de la pompe (220),
dans lequel la section de sortie de signal (80) détecte si la pompe (220) fonctionne en fonction de la vitesse de rotation.

6. Dispositif d'alimentation en additif (200) pour un moteur à combustion interne selon l'une quelconque des revendications 1 à 5, dans lequel les sections de chauffage (310, 320, 330), qui chauffent l'additif, sont des dispositifs de chauffage électriques.
